# EUROPÄISCHE PATENTSCHRIFT

(11) **EP 2 708 406 B1**
(45) Veröffentlichungstag und Bekanntmachung des Hinweises auf die Patenterteilung: **10.08.2016**
(21) Anmeldenummer: 13184410.2
(22) Anmeldetag: 13.09.2013
(51) Int. Cl.: B60N 2/22, B60N 2/235, B60N 2/68, B60N 2/015

(54) **Sitz mit einer Arretierungseinrichtung**
Seat with locking device
Siège doté d'un dispositif de blocage

(30) Priorität: 14.09.2012 DE 102012108641
(43) Veröffentlichungstag der Anmeldung: 19.03.2014
(73) Patentinhaber: GRAMMER AG, 92224 Amberg (DE)
(72) Erfinder: Schulz, Christian, 38704 Liebenburg (DE); Strohal, Christian, 38118 Braunschweig (DE)
(74) Vertreter: Hannke, Christian

(56) Entgegenhaltungen:
- EP-A1- 2 123 194
- WO-A1-2008/015527
- WO-A1-2008/057036
- FR-A5- 2 200 803

## Beschreibung

Die vorliegende Erfindung betrifft einen Sitz, insbesondere einen Fahrzeugsitz, mit einer Arretierungseinrichtung, wobei der Sitz mit einem Sitzteil, welches eine Sitzfläche aufweist und gegenüber einer Bodenfläche im Bereich der Sitzvorderseite abgestützt ist, und mit einer Rückenlehne, die mit dem Sitzteil mittels einer Schwenkachse schwenkbar verbunden ist, ausgestattet ist.

Derartige Fahrzeugsitze sind hinreichend bekannt. Üblicherweise bestehen derartige Sitze, insbesondere Fahrzeugsitze, aus dem genannten Sitzteil, auf den sich die Person setzt, und einer an dem Sitzteil drehbar bzw. schwenkbar angeordneten Rückenlehne, wobei die Rückenlehne in ihrem unteren Bereich, also mit ihrem unteren Ende, schwenkbar im rückwärtigen Bereich des Sitzteiles an diesem befestigt ist. Hierfür weisen derartige Rückenlehnen zusammen mit dem Sitzteil Schwenkachsen auf, deren Verlauf in Sitzbreitenrichtung unterhalb einer Oberfläche eines Sitzpolsters, welches auf dem Sitzteil angeordnet ist, liegt.

Derartige Sitze sind verständlicherweise relativ schwer, da eine derartige Konstruktion ein an sich stabiles Sitzteil erfordert, an dem dauerhaft die Rückenlehne - auch im Falle eines Fahrzeugunfalles - gehalten werden soll.

Der Fahrer, dessen Gewicht mit dynamischen und statischen Kräften eines Fahrzustandes auf das Sitzteil einwirkt, wird durch das Sitzteil selber vorrangig in vertikaler Richtung, also in Fahrzeughöhenrichtung, gestützt, wohingegen die Rückenlehne die Funktion einer vorrangig horizontal ausgerichteten Stützung, also in Fahrzeugvorwärts- und Fahrzeugrückwärtsrichtung im Wesentlichen ausführt.
Somit nimmt zumindest hinsichtlich der Kräfte, die sich in horizontaler Richtung ausrichten, der Übergang von der Rückenlehne zu dem Sitzteil, also die bereits erwähnte Schwenkachse, sämtliche Kräfte auf, die anschließend ebenso wie die in vertikaler Richtung wirkenden Kräfte über das Sitzteil und dem darunterliegenden Sitzteilunterbau auf die Bodenfläche, wie beispielsweise eine Karosserie bzw. Karosseriebodenfläche, abgeleitet werden müssen. Ein derartiger Kräfteverlauf ist nicht nur bezüglich einer optimalen Kräfteverteilung nachteilhaft, sondern erfordert auch eine stabile Konstruktion des Fahrzeugsitzes insgesamt, insbesondere in den Übergangsbereichen von der Rückenlehne zu dem Sitzteil und von dem Sitzteil in den Sitzteilunterbau sowie dem Sitzteilunterbau zu der Bodenfläche. Dies hat hohe Herstell- und Materialkosten und ein hohes Eigengewicht des Sitzes zur Folge.

Weiterhin ist aus der WO2008057036 A1 ein Sitz mit den Merkmalen des Oberbegriffs vom Anspruch 1 bekannt. Demzufolge liegt der vorliegenden Erfindung die Aufgabe zugrunde, einen Sitz, insbesondere einen Fahrzeugsitz, zur Verfügung zu stellen, bei dem eine gute Kräfteverteilung trotz seines sehr geringen Eigengewichtes selbst nach einer erfolgten Schwenkbewegung der Rückenlehne besteht und günstig hergestellt werden kann, sowie einfach in seinem Aufbau ist. Es soll ein Fahrzeugsitz zur Verfügung gestellt werden, der auf einfache Weise unter Aufwand von geringen Kräften eine Arretierung der Rückenlehne in einer vorbestimmbaren Schwenkbewegung ermöglicht.
Diese Aufgabe wird gemäß den Merkmalen des Patentanspruches 1 gelöst.
Ein wesentlicher Punkt der Erfindung liegt darin, dass bei einem Sitz, insbesondere Fahrzeugsitz, mit einem Sitzteil, welches eine Sitzfläche aufweist und gegenüber einer Bodenfläche im Bereich der Sitzvorderseite abgestützt ist und mit einer Rückenlehne, die mit dem Sitzteil mittels einer Schwenkachse schwenkbar verbunden ist, die Rückenlehne mindestens ein unteres gegenüber der Bodenfläche abgestütztes Ende, welches sich nahezu bis zur Bodenfläche erstreckt und ein Abstützelement zur Abstützung des Sitzes im Bereich der Sitzrückseite gegenüber der Bodenfläche darstellt, aufweist. Das untere Ende der Rückenlehne ist mit einer Kurvenbahneinrichtung zum Gleiten des Abstützelementes entlang einer Kurvenbahn bei Durchführung einer Schwenkbewegung der Rückenlehne gegenüber dem Sitzteil in Sitzvorwärts- und Sitzrückwärtsrichtung verbunden.

Eine derartige Kurvenbahn ermöglicht das gezielte Führen des unteren Endes des Abstützelementes und damit der Rückenlehne, die sich, in Höhenrichtung betrachtet, bis zu dem Bodenbereich erstreckt. Ein derartig gezieltes Führen der Rückenlehne während der Schwenkbewegung der Rückenlehne innerhalb einer Kurvenbahn ermöglicht aufgrund des großen Abstandes dieser Kurvenbahn zu der Schwenkachse, die oberhalb der Oberfläche der Sitzfläche bzw. des Sitzteiles liegt, die Verwendung von weniger stabilen Materialien und das kostengünstige Herstellen derartiger Kurvenbahnen, die vorzugsweise mit der Bodenfläche verbunden bzw. daran befestigt sind. Aufgrund des langen Schwenkhebels von der Schwenkachse bis zu dem unteren Ende des Abstützelementes bzw. der Rückenlehne kann auch eine Arretierung des Abstützelementes bzw. der Rückenlehne innerhalb der Kurvenbahn bei einer bestimmten Schwenkstellung der Rückenlehne auf einfache Weise mit wenig Kraftaufwand erfolgen.
Die Kurvenbahneinrichtung kann beispielsweise aus Druckgussaluminium hergestellt sein. Die restlichen Komponenten des Fahrzeugsitzes sind vorzugsweise aus CFK-Faser verstärktem Material, Kunststoffmaterial oder GFK-Faser verstärktem Material zur Gewichteinsparung und zur Herstellung eines Leichtbausitzes hergestellt.
Ein derartig ausgebildeter Sitz bzw. Fahrzeugsitz mit einer sich bis ganz nach unten erstreckenden Rückenlehne ermöglicht zudem, dass eine Kräfteeinleitung der durch die den Sitz benutzende Person wirkenden Kräfte in dem Bodenbereich, beispielsweise in dem Karosseriebereich bei Verwendung eines Fahrzeugsitzes, optimiert werden kann, da die Rückenlehne an sich gegenüber der Bodenfläche rückseitig abgestützt ist. Sitzvorderseitig ist das Sitzteil gegenüber der Bodenfläche abgestützt. Dies bedeutet, dass für die Rückseite des Sitzes die Rückenlehnenabstützelemente und für die Vorderseite des Sitzes Sitzteilabstützelemente zum Abstellen des Fahrzeugsitzes auf der Bodenfläche vorhanden sind.
Somit kann, wenn die Rückenlehne in sich biegesteif ist und in Höhenrichtung von einem oberen Ende bis zu einem unteren Ende durchgehend ausgebildet ist, erreicht werden, dass die auf der Rückenlehne durch die Person einwirkenden Kräfte über das untere Ende der Rückenlehne direkt zumindest teilweise abgeleitet werden. Unter Berücksichtigung des Umstandes, dass eine durch eine derartige Höhenrichtung durchgehende Rückenlehne eine Verschwenkung gegenüber dem Sitzteil um die erwähnte Schwenkachse erfährt, kann festgestellt werden, dass das untere Ende der Rückenlehne eine Art kreisbogenförmige Kraft in Vorwärts- oder Rückwärtsrichtung, bezogen auf den Fahrzeugsitz, auf die Bodenfläche überleitet. Zudem übernimmt das untere Ende der Rückenlehne die Einleitung von vertikal wirkenden Kräften, da für die Aufnahme von Gewichtskräften von der den Sitz benutzenden Person im rückwärtigen Bereich des Sitzes lediglich die als Abstützelemente ausgebildeten unteren Enden der Rückenlehne vorhanden sind.

Weitere vertikal wirkende Kräfte, die von der Bodenfläche aufgenommen werden sollen, werden durch das Sitzteil mit Abstützfußelementen oder dergleichen im vorderen Bereich des Sitzes nach unten weitergegeben.

Ein derartig aufgebauter Fahrzeugsitz hat nicht nur eine optimale Kräfteverteilung bezüglich der Überleitung von den auf den Fahrzeugsitz wirkenden Kräften auf die Bodenfläche, sondern auch bezüglich einer Überleitung von den auf dem Fahrzeugboden oder Flächenboden wirkenden Kräften, wie sie beispielsweise durch Einleitung von externen Kräften bei Durchfahren von Schlaglöchern oder dergleichen entstehen können, auf den Fahrzeugsitz zur Folge.

Die Rückenlehne und das Sitzteil können als nahezu einteilige bzw. einstückige Rückenlehnenrahmen bzw. Sitzteilrahmen vorliegen. Ein derartiger Rückenlehnenrahmen ist dann schwenkbar mit dem Sitzteilrahmen verbunden. Insoweit ist der Sitzteilrahmen mit vorderen Abstützfußelementen bzw. links- und rechtsseitigen Füßen gegenüber der Bodenfläche beabstandet und rückseitig ist er an der gemeinsamen Schwenkachse derart aufgehängt, dass
er von dem Rückenlehnenrahmen, welcher ebenso auf der Bodenfläche indirekt gegenüber der Kurvenbahneinrichtung steht, rückseitig gehalten wird. Somit ist ein einfacher Aufbau des gesamten Fahrzeugsitzes möglich.

Vorzugsweise weist die Kurvenbahn einen Verlauf auf, der sich auf einer Kreisbahn mit einem Radius befindet, wobei der Radius durch den Abstand von der Schwenkachse zu dem unteren Ende des Abstützelementes bestimmt ist. Die Kurvenbahn liegt hierbei in einer Ebene, die sich in Sitzvorwärts- und Sitzrückwärtsrichtung erstreckt.

Gemäß einer bevorzugten Ausführungsform stellt die Kurvenbahn mindestens ein an der Bodenfläche befestigtes kreisbogensegmentförmiges Bauteil dar, gegenüber welchem das Abstützelement arretierbar ist.

Eine derartige Kurvenbahn kann entweder nur einem Abstützelement bzw. Abstützfußelement einer Rückenlehne, also beispielsweise links- oder rechtsseitig, angeordnet sein, oder an beiden Abstützelementen bzw. Abstützfußelementen, natürlich unter der Voraussetzung, dass die Rückenlehne mindestens zwei Abstützelemente zum Abstützen der Rückenlehne gegenüber der Bodenfläche aufweist.

Vorzugsweise stellt das kreisbogensegmentförmige Bauteil mindestens eine an der Bodenfläche befestigte kreisbogensegmentförmige Aussparung dar, innerhalb welcher ein Anteil des Abstützelementes oder ein an dem Abstützelement angeordneter Vorsprung während einer Schwenkbewegung schiebbar ist.

Die Aussparung kann an ihrer Oberseite und/oder an ihrer Unterseite zahnschienenartig ausgebildet sein, um so mindestens ein an dem Abstützelement oder dem Vorsprung befestigtes Klinkenelement, vorzugsweise zwei Klinkenelemente, zwischen zwei Zähnen der zahnschienenartigen Oberseite und/oder Unterseite zur Herstellung einer Arretierungsverbindung eingreifen lassen zu können. Dies ermöglicht eine schnelle Arretierung mittels verschwenkbarer Klinken, um die Rückenlehne sowohl in Vorwärts- als auch in Rückwärtsschwenkrichtung zu arretieren.

Alternativ kann als Arretierung des Vorsprunges der Rückenlehne gegenüber der Bodenfläche der Vorsprung gegenüber einer Oberseite und/oder einer Unterseite der Aussparung mit mindestens einer Ausnehmung, vorzugsweise zwei Ausnehmungen, nämlich einer oberen und einer unteren Ausnehmung, ausgestattet sein, innerhalb welcher mindestens ein Rollenelement oder keilförmiges Element zur Herstellung einer Klemmverbindung zwischen dem Vorsprung und der Oberseite und/oder Unterseite der Aussparung angeordnet ist. Derartige Rollenelemente können innerhalb der Ausnehmungen in Bereiche gebracht werden, innerhalb welcher sie keine Blockierung bzw. Klemmung zwischen dem Vorsprung und der Aussparung praktizieren und alternativ in enger ausgebildete Bereiche gebracht werden, in denen die Klemmverbindung entsteht bzw. wirkt.

Gemäß einer weiteren Ausführungsform weist das kreisbogensegmentförmige Bauteil mindestens eine kreisbogensegmentförmige Außenfläche auf, die zahnschienenartig ausgebildet ist, wobei mindestens ein an dem Abstützelement befestigtes Klinkenelement zwischen zwei Zähnen der zahnschienenartigen Außenfläche, vorzugsweise ober- und unterseitig zur Herstellung einer Arretierungsverbindung eingreifbar ist.

Das Klinkenelement und/oder das Rollenelement bzw. keilförmige Element ist mittels mindestens eines Federelementes zum Einnehmen der Arretierungsverbindung/Klemmverbindung federbeaufschlagt.

Diese Arretierungsverbindung/Klemmverbindung, welche durch das Federelement bewirkt wird, kann durch eine, vorzugsweise handbetätigbare, Entriegelungseinrichtung wieder entriegelt bzw. gelöst werden, indem die Entriegelungseinrichtung entgegen der Federkraft des Federelementes wirkt und die Klinken aus ihrer Arretierungsstellung und die Rollenelemente aus ihrer Klemmstellung bringt.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: in einer schematischen perspektivischen Darstellung einen Fahrzeugsitz gemäß einer Ausführungsform der Erfindung mit einer Rückenlehne, in der kein Rückenlehnenpolster eingesetzt ist;
- Fig. 2a, 2b: in einer Seitendarstellung den erfindungsgemäßen Fahrzeugsitz gemäß der Ausführungsform der Erfindung in einem unverschwenkten und in einem verschwenkten Rückenlehnenzustand;
- Fig. 3: in einer schematischen Ausschnittdarstellung das Zusammenspiel von einem unteren Ende der Rückenlehne mit einer Kurvenbahneinrichtung mit Arretierungsvorrichtung gemäß einer Ausführungsform der Erfindung; und
- Fig. 4: in einer schematischen Ausschnittdarstellung das Zusammenspiel des unteren Endes der Rückenlehne mit einer Kurvenbahneinrichtung mit einer weiteren Arretierungseinrichtung gemäß einer weiteren Ausführungsform der Erfindung.

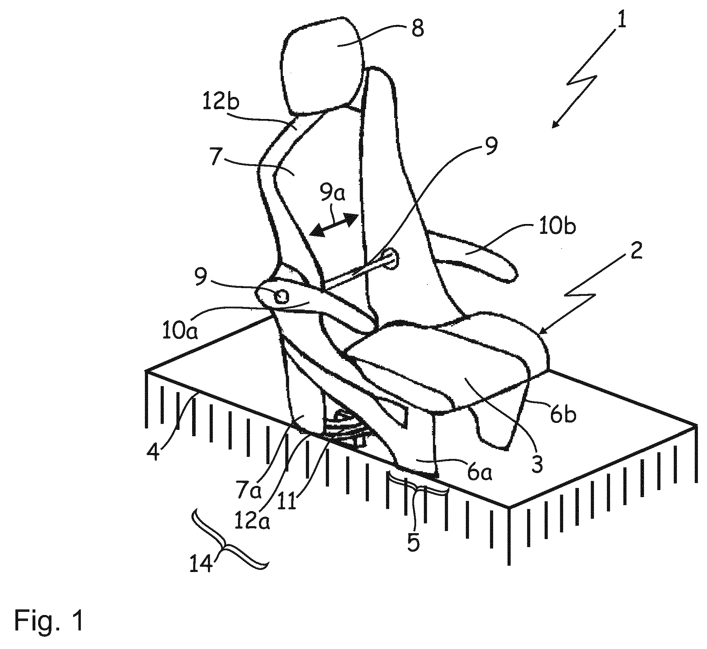

In Fig. 1 ist in einer schematischen perspektivischen Darstellung ein Fahrzeugsitz gemäß der Erfindung gezeigt, wobei dieser Fahrzeugsitz 1 mit einem Sitzpolster 3 innerhalb eines Sitzteiles 2 dargestellt ist, jedoch ohne ein innerhalb einer Rückenlehne 7 angeordnetes Rückenlehnenpolster.

In einem vorderen Sitzbereich ist das Sitzteil 2 als Rahmenkonstruktion mit vorderen Füßen 6a und 6b bzw. Abstützfußelementen 6a und 6b gegenüber einem Karosserieboden abgestützt und auf diesen Abstützfußelementen abgestellt.

In einem rückwärtigen Bereich 14 ist der gesamte Fahrzeugsitz über die Abstützfußelemente 7a mit einer unteren Seite 12a der Rückenlehne 7 entweder direkt auf der Bodenfläche 4 abgestellt oder mittels einer Kurvenbahneinrichtung 11 an der Bodenfläche 4 befestigt.

Die Rückenlehne 7 hat einen in Höhenrichtung durchgehenden Verlauf von ihrem unteren Ende 12a bis zu ihrem oberen Ende 12b und kann als Ganzes um eine Schwenkachse 9, die in Sitzbreitenrichtung 9a verläuft, gegenüber dem Sitzteil 2 geschwenkt werden. Hieraus ergibt sich ein Verschwenken nach vorne und ein leicht nach oben ausgerichtetes Verschwenken der unteren Seite 12a der Rückenlehne 7, welche durch die Kurvenbahneinrichtung 11 gleitet und stabilisiert wird.

An der Schwenkachse 9 sind zusätzlich Armlehnen 10a und 10b links- und rechtsseitig an dem Fahrzeugsitz angebracht.

Oberhalb der Rückenlehne kann zusätzlich eine Kopfstütze 8 angeordnet sein, die alternativ in die Rückenlehne 7 mit integriert ist.

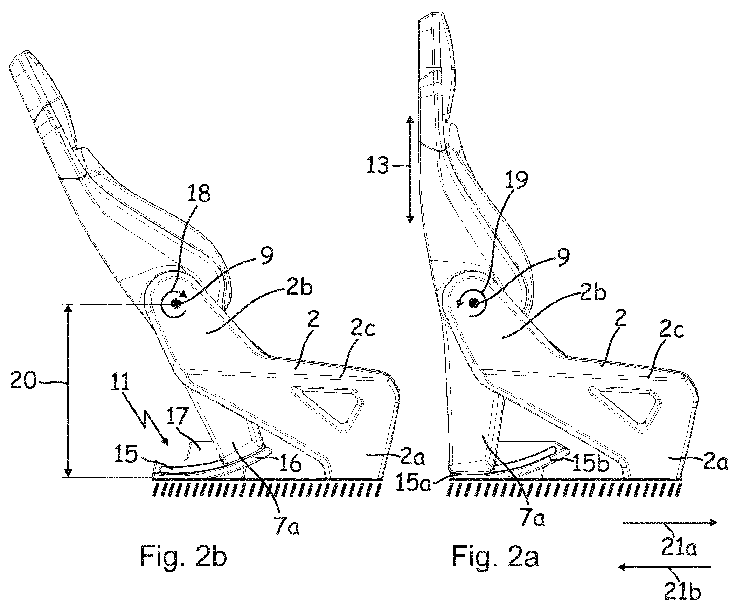

In Fig. 2a und 2b sind zwei Seitendarstellungen des erfindungsgemäßen Fahrzeugsitzes mit unverschwenkter und verschwenkter Rückenlehne 7 wiedergegeben. Diesen Darstellungen ist zu entnehmen, dass - wenn eine Schwenkbewegung entlang des Pfeiles 19 von der Rückenlehne 7 gegenüber dem Sitzteil 2 derart stattfindet, dass die Rückenlehne in ihrem oberen Bereich nach hinten geschwenkt wird und in ihrem unteren Bereich nach vorne bezüglich des Fahrzeugsitzes geschwenkt wird - das untere Ende 12a der Rückenlehne 7 entlang einer Kurvenbahn 16, 17, die innerhalb einem an der Bodenfläche 4 angebrachten Bauelement 17 angeordnet sind, nach vorne und nach oben verschwenkt wird.

Diese Kurvenbahn ist derart ausgebildet, dass sie als Bogenabschnitt mit einem Radius ausgestattet ist, welcher dem Abschnitt 20 von der Schwenkachse 9 zu dem unteren Ende 12a der Rückenlehne 7 entspricht.

Maßgeblich zu den Teilen zur Bildung der Kurvenbahn kann ein kreisbogensegmentförmiger Schlitz 15 bzw. eine Aussparung 15 angeordnet sein, in den ein Vorsprung, der an dem Abstützelement 7a der Rückenlehne seitlich angebracht ist, eingreift.

Zudem ist eine bogenförmige Abstützbahn 16 angeordnet, auf der das untere Ende 12a der Rückenlehne 7 bzw. des Abstützelementes 7a stützend entlangfahren kann, während eine Schwenkbewegung stattfindet und der Fahrzeugsitz durch sein Eigengewicht und das Gewicht der den Sitz benutzenden Person von oben belastet wird.

Wenn, wie in Fig. 2b dargestellt, der Fahrzeugsitz mit einer verschwenkten Rückenlehne 7 wieder in seine Ausgangsstellung zurückkehren soll, dann findet eine Rückenlehnenverschwenkung in Pfeilrichtung 18 derart statt, dass das obere Ende 12b der Rückenlehne 7 nach vorne, also in Fahrzeugsitzrichtung nach vorne gemäß Bezugszeichen 21 a verschwenkt wird, und das untere Ende 12a der Rückenlehne 7 nach hinten verschwenkt wird. In dieser Stellung ist das Abstützfußelement 7a am hinteren Ende 15a der nutenförmig ausgebildeten Kurvenbahn 15 angeordnet, wohingegen bei einer vollständig verschwenkten Stellung der Rückenlehne 7 nach hinten gemäß Bezugszeichen 21 b das Abstützfußelement 7a das vordere Ende 15b der Kurvenbahn 15 erreicht.

Sobald das Ende 15a oder 15b erreicht ist, entsteht eine Anschlagswirkung, welche bewirkt, dass die Rückenlehne 7 nicht mehr weiter verschwenkt werden kann. Vorteilhaft kann hier durch die Länge der Kurvenbahn 15 auch das Maß der Schwenkbewegung der Rückenlehne vorgegeben werden.

Um eine derart einfache und kräfteoptimierte Konstruktion des Fahrzeugsitzes zu erhalten, ist es erforderlich, dass die Rückenlehne 7 in Höhenrichtung 3 durchgehend erstreckend ausgebildet ist. Dies bedeutet, dass die Rückenlehne von ihrem oberen Ende bis zu ihrem unteren Ende idealerweise zumindest in dieser Richtung einstückig ausgebildet ist.

Auf diese Weise kann vorteilhaft die Krafthebelwirkung bezüglich der Schwenkachse 9 erhalten werden, die es ermöglicht, dass mit geringer Kraft im Bereich der Kurvenbahneinrichtung das untere Ende der Rückenlehne in einer bestimmten Stellung, die vorbestimmbar ist, gehalten werden kann. Dies ergibt sich hauptsächlich durch den relativ langen Krafthebel 20, wie in Fig. 2b dargestellt. Es ist leicht nachvollziehbar, dass aufgrund des relativ langen Krafthebelarmes 20 ein leichtes Kontrollieren der Schwenkbewegung der Rückenlehne mittels der Kurvenbahneinrichtung und mittels einer nun zu beschreibenden Arretierungseinrichtung möglich ist.

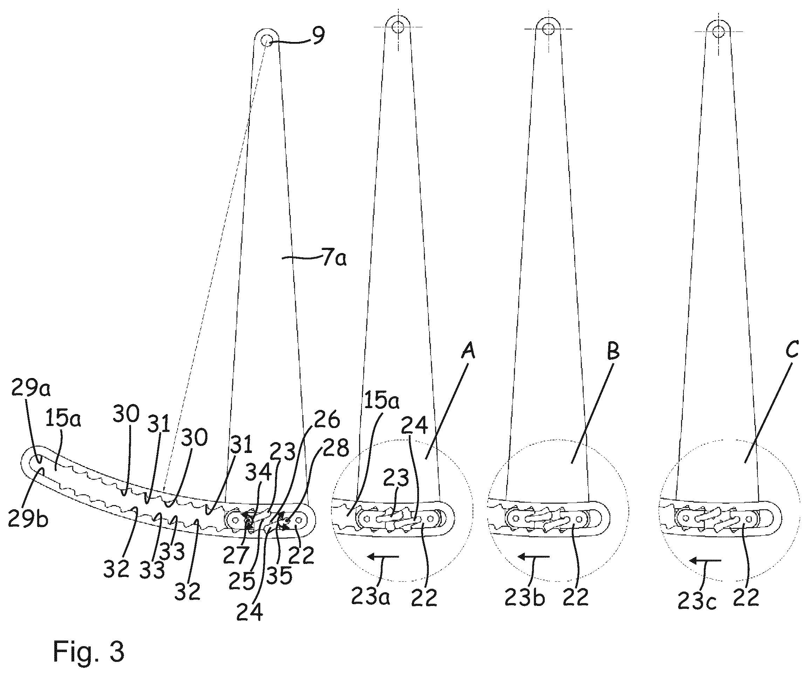

In Fig. 3 wird in einer schematischen detaillierten Darstellung die Wechselwirkung zwischen einem unteren Ende 12a des Abstützelementes 7a und der Kurvenbahneinrichtung mit dazugehöriger Arretierungseinrichtung gemäß einer Ausführungsform der Erfindung gezeigt.

Dieser Darstellung ist zu entnehmen, dass das Abstützelement 7a einen seitlich angebrachten Vorsprung 22 aufweist, welcher wiederum in eine nutenförmige oder schlitzartige Aussparung 15a von der Seite aus eingreift.

Die Aussparung 15a ist im Wesentlichen kreisbogensegmentförmig ausgebildet und weist an ihrer inneren Oberseite 29a zahnschienenartige Ausbildungen auf, die aus Zähnen 30 und zwischen den Zähnen 30 bestehenden Vertiefungen 31 bestehen.

Ebenso ist an einer Unterseite 29b der Aussparung 15a eine zahnschienenartige Ausbildung mittels Zähnen 32 und zwischen den Zähnen 32 angeordneten Vertiefungen 33 vorhanden.

Bei einem Vergleich der in Fig. 3 dargestellten Detailansichten A, B und C, die jeweils den Ausschnitt des Abstützelementes 7a im Bereich der Kurvenbahneinrichtung wiedergeben und den Fahrzeugsitz mit einer Rückenlehne in verschiedenen Schwenkbewegungen darstellen, wird deutlich, dass eine Arretierungseinrichtung bei einem Verschwenken der Rückenlehne wirksam wird. Diese Arretierungseinrichtung besteht im Wesentlichen aus verschwenkbaren Klinken 23, 24, wobei die oberseitig angeordnete Klinke 23 nach oben bezüglich der Zähne 30 und der Vertiefungen 31 wirkt und die untere Klinke 24 nach unten bezüglich der Zähne 32 und den dazwischenliegenden Vertiefungen 33 wirkt.

Beide Klinken 23, 24 sind um Schwenkpunkte 27, 28 verschwenkbar angeordnet, wobei diese Schwenkpunkte bzw. Schwenkachsen in Fahrzeugsitzbreitenrichtung verlaufen.

Eine Schwenkbewegung der Klinken 23, 24 wird durch die Doppelpfeile 34, 35 wiedergegeben.

Beide Klinken 23, 24 sind während einer Verriegelungsposition, also in einem Zustand, in dem die Klinken 23, 24 in die Vertiefungen 31, 33 eingreifen, durch ein angedeutetes Federelement 25, 26 federbeaufschlagt.

Dieses Federelement 25, 26 kann mittels einer hier nicht näher dargestellten Entriegelungseinrichtung gegen dessen Federkraft zusammengedrückt werden und dafür sorgen, dass, wie in der Abbildung A und B gezeigt, die Klinken 23, 24 aus ihren Vertiefungen 31, 33 herausbewegt werden und über die sägezahnartig ausgebildeten zahnschienenartigen Ober- und Unterseiten aufgrund des Verschwenkens des Abstützelementes 7a bewegt werden. Hierfür findet eine Schwenkbewegung des unteren Endes 12a des Abstützelementes 7a gegenüber der Kurvenbahneinrichtung in Richtung des Pfeiles 23a statt. Eine weitergehende Bewegung wird durch den Pfeil 23b gemäß Abbildung B und den Pfeil 23c gemäß Abbildung C gezeigt.

In der Abbildung C sind die Klinken 23, 24 bereits in die nächste Vertiefung 31, 33 eingerastet und arretieren, wie dieser Darstellung deutlich zu entnehmen ist, das Abstützelement 7a in beide Richtungen, also in Vorwärts- und in Rückwärtsrichtung. Dies findet durch das entgegengesetzte Eingreifen in die Vertiefungen 31, 33 und Aufhängen der Klinken 23, 24 statt.

Selbstverständlich kann für derartige Entriegelungsvorgänge zum Zusammendrücken der Feder 25, 26 jede Art von Betätigungselement verwendet werden, wie beispielsweise ovalförmige Scheiben oder Keile oder dergleichen.

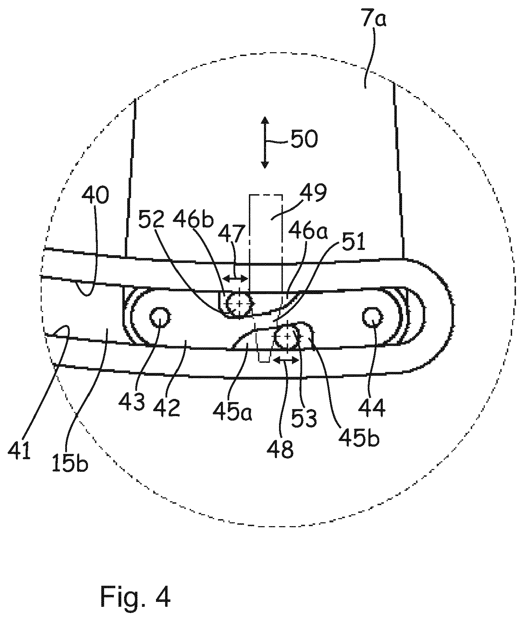

In Fig. 4 ist in einer weiteren Detailansicht schematisch das Zusammenspiel der Abstützelementes 7a mit der Kurvenbahneinrichtung mit einer weiteren Arretierungseinrichtung gemäß einer weiteren Ausführungsform wiedergegeben.

Dieser Darstellung gemäß Fig. 4 ist zu entnehmen, dass eine Vorsprung 42, der seitlich an dem Abstützelement 7a befestigt ist, einen oval geformten Fortsatz aufweist, der mittels Befestigungselementen 43, 44 an dem Abstützelement 7a seitlich befestigt ist. Dieser Fortsatz bzw. Vorsprung 42 weist unterseitig eine Ausnehmung 45a, 45b und oberseitig eine Ausnehmung 46a, 46b auf, wobei diese beiden Ausnehmungen derart gestaltet sind, dass sie einen Bereich 45a, 46a aufweisen, indem ein Rollenelement 52, 53 gegenüber einer Oberseite 40 und einer Unterseite 41 einer Aussparung 15b arretiert werden kann. Ebenso weisen diese Ausnehmungen einen Bereich 45b und 46b, in dem das Rollenelement 52, 53 ohne Verklemmung zwischen den Seiten 40, 41 und dem Fortsatz 42 miteinander durch das Rollenelement verklemmt werden.

Damit kann das Rollenelement in die Pfeilrichtungen 47 und 48 hin und her verschoben werden, um gewünschtermaßen eine Klemmverbindung und damit eine Arretierungsverbindung des Vorsprunges 42 und damit des Abstützelementes 7a gegenüber der Kurvenbahneinrichtung und der Aussparung 15b zu erreichen oder nicht.

Eine derartige Entriegelung, also eine Bewegung der Rollenelemente 52, 53 in die Bereiche 46b und 45b kann durch einen von oben einschiebbaren Keil 49 gemäß der Pfeilrichtung 50 gehalten werden. Sobald der Keil 49 nach oben geschoben wird, können die Rollen wieder in ihre Klemmverbindung in den Bereichen 46a und 45a zurückwandern. Dies kann beispielsweise mittels einer Federbeaufschlagung, wozu ein Federelement hier nicht näher dargestellt ist, erfolgen. Sobald der Keil 49 von oben entlang der Pfeilrichtung 50 nach unten geschoben wird, werden die Rollenelemente wieder in ihre Freilaufpositionen 45b und 46b gedrückt und entriegeln somit das Abstützelement 7a gegenüber der Aussparung 15b bzw. der Kurvenbahneinrichtung.

In einem mittleren Bereich 51 des Vorsprunges 42 kann der Keil 49 mittels einer nicht näher dargestellten Aussparung oder eines Loches hindurchgeschoben werden.

### Bezugszeichenliste

- A: Detailansicht
- B: Detailansicht
- C: Detailansicht
- 1: Fahrzeugsitz
- 2: Sitzteil
- 3: Sitzpolster/Höhenrichtung
- 4: Bodenfläche
- 5: Sitzvorderseite
- 6a: Fuß, Abstützfußelement
- 6b: Fuß, Abstützfußelement
- 7: Rückenlehne
- 7a: Abstützfußelement/Abstützelement
- 8: Kopfstütze
- 9: Schwenkachse
- 9a: Sitzbreitenrichtung
- 10a: Armlehne
- 10b: Armlehne
- 11: Kurvenbahneinrichtung
- 12a: untere Seite/unteres Ende
- 12b: oberes Ende
- 14: rückwärtiger Bereich
- 15: Schlitz/Aussparung/Kurvenbahn/Bauteil
- 15a: hinteres Ende/Aussparung
- 15b: vorderes Ende/Aussparung
- 16: Kurvenbahn/Bauteil
- 17: Kurvenbahn/Bauelement
- 18: Pfeilrichtung/Schwenkbewegung
- 19: Pfeil/Schwenkbewegung
- 20: Krafthebel/Krafthebelarm/Abstand
- 21a: Fahrzeugsitzrichtung/Sitzvorwärts- und Sitzrückwärtsrichtung
- 21b: Sitzvorwärts- und Sitzrückwärtsrichtung
- 22: Vorsprung
- 23: obere Klinke
- 23a: Pfeil
- 23b: Pfeil
- 23c: Pfeil
- 24: untere Klinke
- 25: Federelement/Feder
- 26: Federelement/Feder
- 27: Schwenkpunkt
- 28: Schwenkpunkt
- 29a: innere Oberseite/ Ober- und/oder Unterseite
- 29b: Ober- und/oder Unterseite
- 30: Zähne
- 31: Vertiefungen
- 32: Zähne
- 33: Vertiefungen
- 34: Doppelpfeil
- 35: Doppelpfeil
- 40: Seite
- 41: Unterseite/Seite/Ober- und/oder Unterseite
- 42: Vorsprung/Fortsatz
- 43: Befestigungselement
- 44: Befestigungselement
- 45b: Bereich
- 46b: Bereich
- 47: Pfeilrichtung
- 48: Pfeilrichtung
- 49: Keil
- 50: Pfeilrichtung
- 51: mittlerer Bereich
- 52: Rollenelement
- 53: Rollenelement

## Patentansprüche

1. Sitz, insbesondere Fahrzeugsitz, mit einem Sitzteil (2), welches eine Sitzfläche (3) aufweist und gegenüber einer Bodenfläche (4) im Bereich der Sitzvorderseite (5) abgestützt ist, und mit einer Rückenlehne (7), die mit dem Sitzteil (2) mittels einer Schwenkachse (9) schwenkbar verbunden ist,
wobei die Rückenlehne mindestens ein unteres, gegenüber der Bodenfläche (4) abgestütztes Ende (12a), welches sich nahezu bis zu der Bodenfläche (4) erstreckt und ein Abstützelement (7a) zur Abstützung des Sitzes (1) im Bereich der Sitzrückseite (14) gegenüber der Bodenfläche (4) darstellt, aufweist,
**dadurch gekennzeichnet, dass**
die Rückenlehne (7), die eine Verschwenkung gegenüber dem Sitzteil (2) um die Schwenkachse (9), die oberhalb der Oberfläche der Sitzfläche (3) ist, erfährt,
wobei das untere Ende (12a) der Rückenlehne (7) mit einer Kurvenbahneinrichtung (11) zum Gleiten des Abstützelementes (7a) entlang einer Kurvenbahn (15, 16) bei Durchführung einer Schwenkbewegung (18, 19) der Rückenlehne (7) gegenüber dem Sitzteil (2) in Sitzvorwärts- und Sitzrückwärtsrichtung (21 a, 21 b) verbunden ist.

2. Sitz nach Anspruch 1,
**dadurch gekennzeichnet, dass**
die Kurvenbahn (15, 16) einen Verlauf aufweist, der sich auf einer Kreisbahn mit einem Radius befindet, wobei der Radius durch den Abstand (20) von der Schwenkachse (9) zu dem unteren Ende (12a) des Abstützelementes (7a) bestimmt ist.

3. Sitz nach Anspruch 2,
**dadurch gekennzeichnet, dass**
die Kurvenbahn (15, 16) in einer Ebene, die sich in Sitzvorwärts- und Sitzrückwärtsrichtung (21 a, 21 b) erstreckt, ausgerichtet ist.

4. Sitz nach Anspruch 2 oder 3,
**dadurch gekennzeichnet, dass**
die Kurvenbahn mindestens ein an der Bodenfläche (4) befestigtes kreisbogensegmentförmiges Bauteil (15, 16) darstellt, gegenüber welchem das Abstützelement (7a) arretierbar ist.

5. Sitz nach Anspruch 4,
**dadurch gekennzeichnet, dass**
das kreisbogensegmentförmige Bauteil mindestens eine an der Bodenfläche (4) befestigte kreisbogensegmentförmige Aussparung (15a, 15b) darstellt, innerhalb welcher ein Anteil des Abstützelementes (7a) oder ein an dem Abstützelement (7a) angeordneter Vorsprung (22, 42) während einer Schwenkbewegung (18, 19) verschiebbar ist.

6. Sitz nach Anspruch 5,
**dadurch gekennzeichnet, dass**
die Aussparung an der Oberseite (29a) und/oder an der Unterseite (29b) zahnschienenartig ausgebildet ist, wobei mindestens ein an dem Abstützelement (7a) oder dem Vorsprung (22) befestigtes Klinkenelement (23, 24) zwischen zwei Zähnen (30, 32) der zahnschienenartigen Oberseite und/oder Unterseite (29a, 29b) zur Herstellung einer Arretierungsverbindung eingreifbar ist.

7. Sitz nach Anspruch 5,
**dadurch gekennzeichnet, dass**
der Vorsprung (42) gegenüber einer Oberseite (40) und/oder einer Unterseite (41) der Aussparung (15b) mindestens eine Ausnehmung (45a, 45b, 46a, 46b) aufweist, innerhalb welcher mindestens ein Rollenelement (52, 53) oder keilförmiges Element zur Herstellung einer Klemmverbindung zwischen dem Vorsprung (15b) und der Oberseite (40) und/oder Unterseite (41) der Aussparung (15b) angeordnet ist.

8. Sitz nach Anspruch 4,
**dadurch gekennzeichnet, dass**
das kreisbogensegmentförmige Bauteil mindestens eine kreisbogensegmentförmige Außenfläche aufweist, die zahnschienenartig ausgebildet ist, wobei mindestens ein an dem Abstützelement (7a) befestigtes Klinkenelement zwischen zwei Zähnen der zahnschienenartigen Außenfläche zur Herstellung einer Arretierungsverbindung eingreifbar ist.

9. Sitz nach einem der Ansprüche 6 - 8,
**dadurch gekennzeichnet, dass**
das Klinkenelement (23, 24) und das Rollenelement (52, 53) bzw. das keilförmige Element mittels mindestens eines Federelementes (25, 26) zum Einnehmen der Arretierungsverbindung/Klemmverbindung federbeaufschlagt ist/sind.

10. Sitz nach Anspruch 9,
**dadurch gekennzeichnet, dass**
das Klinkenelement (23, 24) und das Rollenelement (52, 53) bzw. keilförmige Element mittels einer, vorzugsweise handbetätigbaren Entriegelungseinrichtung entgegen einer Federkraft des Federelementes (25, 26) zur Entriegelung der Arretierungsverbindung/Klemmverbindung bewegbar ist/sind.

## Claims

1. Seat, in particular a vehicle seat, comprising a seat part (2), which has a seat surface (3) and is supported relative to a floor (4) in the region of the front side (5) of the seat, and comprising a backrest (7) which is pivotally connected to the seat part (2) by means of a pivot axis (9),
the backrest having at least one lower end (12a) which is supported relative to the floor (4) and extends nearly as far as the floor (4) and forms a support element (7a) for supporting the seat (1) in the region of the rear side of the seat (14) relative to the floor (4),
**characterised in that**
the backrest (7), which pivots relative to the seat part (2) about the pivot axis (9), which is above the surface of the seating surface (3), the lower end (12a) of the backrest (7) being connected to a curved path device (11) for sliding the support element (7a) along a curved path (15, 16) during a pivoting movement (18, 19) of the backrest (7) relative to the seat part (2) in a forward direction and backward direction (21 a, 21 b) of the seat.

2. Seat according to claim 1,
**characterised in that**
the curved path (15, 16) has a course which is on a circular path having a radius, the radius being determined by the spacing (20) between the pivot axis (9) and the lower end (12a) of the support element (7a).

3. Seat according to claim 2,
**characterised in that**
the curved path (15, 16) is oriented in a plane which extends in the forward direction and the backward direction (21 a, 21 b) of the seat.

4. Seat according to either claim 2 or claim 3,
**characterised in that**
the curved path forms at least one arc-shaped component (15, 16) which is attached to the floor (4) and relative to which the support element (7a) can be locked.

5. Seat according to claim 4,
**characterised in that**
the arc-shaped component forms at least one arc-shaped opening (15a, 15b) which is attached to the floor (4) and inside which a portion of the support element (7a) or a projection (22, 42) arranged on the support element (7a) can be slid during a pivot movement (18, 19).

6. Seat according to claim 5,
**characterised in that**
the opening on the upper side (29a) and/or on the lower side (29b) is formed in the manner of a toothed rack, it being possible for at least one pawl element (23, 24) which is attached to the support element (7a) or to the projection (22) to engage between two teeth (30, 32) of the toothed-rack-like upper side and/or lower side (29a, 29b) in order to produce a locking connection.

7. Seat according to claim 5,
**characterised in that**
the projection (42) has at least one recess (45a, 45b, 46a, 46b) opposite an upper side (40) and/or a lower side (41) of the opening (15b), inside which recess at least one roller element (52, 53) or cuneiform element is arranged to produce a clamped connection between the projection (15b) and the upper side (40) and/or lower side (41) of the opening (15b).

8. Seat according to claim 4,
**characterised in that**
the arc-shaped component has at least one arc-shaped outer surface which is formed in the manner of a toothed rack, it being possible for at least one pawl element attached to the support element (7a) to engage between two teeth of the toothed-rack-like outer surface in order to produce a locking connection.

9. Seat according to any of claims 6 to 8,
**characterised in that**
the pawl element (23, 24) and the roller element (52, 53) or the cuneiform element respectively is/are spring-loaded by means of at least one spring element (25, 26) in order to assume the locking connection/clamped connection.

10. Seat according to claim 9,
**characterised in that**
the pawl element (23, 24) and the roller element (52, 53) or cuneiform element respectively can be moved by means of a release device which can be preferably manually actuated against a spring force of the spring element (25, 26) in order to release the locking connection/clamped connection.

## Revendications

1. Siège, plus particulièrement siège de véhicule, avec une partie d'assise (2), qui comprend une surface d'assise (3) et qui est appuyée contre une surface de fond (4) au niveau de l'avant du siège (5) et avec un dossier (7), qui est relié de manière pivotante avec la partie d'assise (2) au moyen d'un axe de pivotement (9),
le dossier comprenant au moins une extrémité inférieure (12a) appuyée contre la surface de fond (4), qui s'étend presque jusqu'à la surface de fond (4) et qui constitue un élément d'appui (7a) pour l'appui du siège (1) au niveau de l'arrière du siège (14) contre la surface de fond (4),
**caractérisé en ce que**
le dossier (7), qui subit un pivotement par rapport à la partie d'assise (2) autour de l'axe de pivotement (9), qui se trouve au-dessus de la surface de la surface d'assise (3), l'extrémité inférieure (12a) du dossier (7) étant reliée avec un dispositif à piste courbe (11) pour le coulissement de l'élément d'appui (7a) le long d'une piste courbe (15, 16) lors de la réalisation d'un mouvement de pivotement (18, 19) du dossier (7) par rapport à la partie d'assise (2) vers l'avant et vers l'arrière du siège (21 a, 21 b).

2. Siège selon la revendication 1,
**caractérisé en ce que**
la piste courbe (15, 16) présente un tracé qui se trouve sur une piste circulaire avec un rayon, le rayon étant déterminé par la distance (20) entre l'axe de pivotement (9) et l'extrémité inférieure (12a) de l'élément d'appui (7a).

3. Siège selon la revendication 2,
**caractérisé en ce que**
la piste courbe (15, 16) se trouve dans un plan qui s'étend vers l'avant et vers l'arrière du siège (21 a, 21 b).

4. Siège selon la revendication 2 ou 3,
**caractérisé en ce que**
la piste courbe constitue au moins un composant (15, 16) en forme de segment d'arc de cercle fixé à la surface de fond (4), par rapport auquel l'élément d'appui (7a) peut être bloqué.

5. Siège selon la revendication 4,
**caractérisé en ce que**
le composant en forme de segment d'arc de cercle présente au moins une encoche (15a, 15b) en forme de segment d'arc de cercle fixée à la surface de fond (4), à l'intérieur duquel une partie de l'élément d'appui (7a) ou une saillie (22, 42) disposée sur l'élément d'appui (7a) peut coulisser pendant un mouvement de pivotement (18, 19).

6. Siège selon la revendication 5,
**caractérisé en ce que**
l'encoche est réalisée sur le côté supérieur (29a) et/ou sur le côté inférieur (29b) à la manière d'une crémaillère, au moins un élément à cliquet (23, 24) fixé à l'élément d'appui (7a) ou à la saillie (22) pouvant s'emboîter entre deux dents (30, 32) du côté supérieur et/ou du côté inférieur (29a, 29b) en forme de crémaillère pour l'établissement d'une liaison à blocage.

7. Siège selon la revendication 5,
**caractérisé en ce que**
la saillie (42) comprend, par rapport à un côté supérieur (40) et/ou à un côté inférieur (41) de l'encoche (15b), au moins un évidement (45a, 45b, 46a, 46b) à l'intérieur duquel se trouve au moins un élément à rouleau (52, 53) ou un élément cunéiforme pour l'établissement d'une liaison à serrage entre la saillie (15b) et le côté supérieur (40) et/ou le côté inférieur (41) de l'encoche (15b).

8. Siège selon la revendication 4,
**caractérisé en ce que**
le composant en forme de segment d'arc de cercle comprend au moins une surface externe en forme de segment d'arc de cercle, qui est conçue à la manière d'une crémaillère, au moins un élément à cliquet fixé à l'élément d'appui (7a) pouvant s'emboîter entre deux dents de la surface externe en forme de crémaillère pour l'établissement d'une liaison à blocage.

9. Siège selon l'une des revendications 6 à 8,
**caractérisé en ce que**
l'élément à cliquet (23, 24) et l'élément à rouleau (52, 53) ou l'élément cunéiforme respectivement est/sont suspendu(s) au moyen d'au moins un élément à ressort (25, 26) pour l'établissement de la liaison à blocage/à serrage.

10. Siège selon la revendication 9,
**caractérisé en ce que**
l'élément à cliquet (23, 24) et l'élément à rouleau (52, 53) ou l'élément cunéiforme respectivement est/sont mobile(s) au moyen d'un dispositif de déverrouillage, actionnable de préférence manuellement, à l'encontre d'une force élastique de l'élément à ressort (25, 26) pour le déverrouillage de la liaison à blocage/à serrage.
